# EUROPEAN PATENT APPLICATION

(11) **EP 3 434 420 A1**
(43) Date of publication of application: **30.01.2019**
(21) Application number: 18183545.5
(22) Date of filing: 13.07.2018
(51) Int. Cl.: B25F 5/00

(54) **OUTRUNNER MOTOR IN CORDLESS POWER TOOL**

(30) Priority: 24.07.2017 US 201715657256
(71) Applicant: Ingersoll-Rand Company, Davidson, NC 28036 (US)
(72) Inventor: SEITH, Warren A, Bethlehem, PA Pennsylvania 18020 (US); MCCLUNG, Mark T, Andover, NJ New Jersey 07821 (US)
(74) Representative: Haseltine Lake LLP

(57) **Abstract**

An illustrative embodiment of a power tool (2) is provided. The power tools include a housing (4) that extends along a longitudinally extending axis (24); an outrunner motor (16) located within the housing; the outrunner motor includes an outboard rotating rotor (22) that rotates around a stator portion (28) of the outrunner motor; and a rotating shaft (30) that is attached to the outboard rotating rotor (22) and disposed through the stator portion; wherein the rotating shaft attaches to rotating structures that rotate an output drive (10).

## Description

### TECHNICAL FIELD AND SUMMARY

The present disclosure relates, generally, to power tools and, more particularly, to power tools that employ a brushless DC motor having an external rotor that rotates around the brushless DC motor's stator.

Electric cordless impact tools may be used in many applications where substantial torque is needed to remove a bolt, but compressed air is not available. These cordless tools meet the need despite being heavy. Such cordless impact tools include a conventional interior-rotor motor where the rotor is located in the interior of the motor and is surrounded by the stator exterior of the rotor.

In contrast, the present disclosure provides a brushless DC (BLDC) "outrunner" motor as the motive source for certain cordless power tools including impact tools. Such an outrunner BLDC motor employs an external rotor which provides higher torque in a smaller footprint. A smaller motor may reduce the overall weight and size of the power tool as compared to its standard-motor (i.e., interior-rotor motor) counterpart. In addition to size, it is believed a power tool employing an outrunner motor architecture may achieve higher energy densities.

An illustrative embodiment of the present disclosure provides a power tool comprising: a housing that extends along a longitudinally extending axis; an outrunner motor located within the housing; wherein the outrunner motor includes an outboard rotating rotor that rotates around a stator portion of the outrunner motor; and a rotating shaft is attached to the outboard rotating rotor and disposed through the stator portion; wherein the rotating shaft attaches to rotating structures that rotate an output drive. Such power tools contemplated herein that includes a rotating shaft that rotates an output drive include, but are not limited to impact tools, drills, oil-pulse drivers, angle impact drivers, steel rod cutters, metal shears, die grinders, plate joiners, multi tools, jig saws, and reciprocating saws.

In the above and other illustrative embodiments, the power tool may further include any one or more of the following: at least one battery to power the outrunner motor; the power tool being selected from the group consisting of a impact tools, drills, oil-pulse drivers, angle impact drivers, steel rod cutters, metal shears, die grinders, plate joiners, multi tools, jig saws, and reciprocating saws; the outrunner motor being a brushless direct-current motor; the rotating shaft rotated by the outboard rotating rotor extending to at least one gear; the at least one gear being a plurality of gears; the plurality of gears drive a hammer and anvil mechanism that is part of an impact tool, wherein the anvil drives the output drive, and wherein the brushless direct-current motor rotates at least one gear that rotates structures selected from the group consisting of at least one of a clutch, chuck section, scotch-yoke type mechanism, and other like rotary or rotary-to-linear-reciprocating motion mechanisms.

Another illustrative embodiment of the present disclosure provides a power tool which comprises: an impact tool mechanism that includes a hammer driven by a cam shaft rotated by at least one gear, such that the hammer is configured to impact an anvil that drives an output drive; a housing that houses at least a portion of the impact tool mechanism; an outrunner motor also located within the housing; wherein the outrunner motor includes an outboard rotating rotor that rotates around a stator portion of the outrunner motor; a rotating shaft that is attached to the outboard rotating rotor and disposed through the stator portion; wherein the rotating shaft is configured to rotate the at least one gear to cause the hammer to impact the anvil.

In the above and other illustrative embodiments, the power tool may further include any one or more of the following: at least one battery to power the outrunner motor; the outrunner motor being a brushless direct-current motor; the outrunner motor including a plurality of magnets attached to the outboard rotating rotor exterior of the diameter of the stator; the outrunner motor including a magnet stator interface that is exterior of the diameter of the stator; the outrunner motor produces less heat than an interior-rotor motor and the outrunner motor produces one or more characteristics selected from the group consisting of higher inertia, higher torque, lower revolutions per minute, and high power density as compared to an interior-rotor motor that has a longer axial length than the outboard rotating rotor of the outrunner motor; and the rotating shaft being attached to the outboard rotating rotor by a drive plate that secures to both the rotating shaft and the rotor.

Additional features and advantages of the outrunner power tools will become apparent to those skilled in the art upon consideration of the following detailed description of the illustrated embodiments exemplifying best modes of carrying out the outrunner power tools as presently perceived.

### BRIEF DESCRIPTION OF THE DRAWINGS

The concepts described in the present disclosure are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels may be repeated among the figures to indicate corresponding or analogous elements.
Fig. 1 is a perspective view of an illustrative embodiment of an impact tool;
Fig. 2 is a cross-sectional elevational view of impact tool;
Fig. 3 are comparative side elevation views of stator portion of a outrunner BLDC motor as compared to stator portion of a conventional interior-rotor motor;
Fig. 4 is a chart that depicts the efficiency of an illustrative 40-volt BLDC interior-rotor motor such as that which uses the interior-stator shown in Fig. 3;
Fig. 5 is a chart that depicts the efficiency of an illustrative 40-volt outrunner BLDC motor;
Fig. 6 is a chart that shows a side-by-side comparison depicting the power generated by both the interior-rotor motor and outrunner BLDC motor; and
Fig. 7 is a cross-sectional view of power drill that employs the outrunner BLDC motor.

The exemplification set out herein illustrates embodiments of the outrunner power tools, and such exemplification is not to be construed as limiting the scope of the outrunner power tools in any manner.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the present disclosure.

The present disclosure provides a brushless outrunner BLDC motor as the power source for certain cordless power tools. Such an outrunner employs an external rotor which provides higher torque in a smaller footprint. A smaller motor may reduce the overall weight and size of the power tool as compared to its interior-rotor motor counterpart. Illustrative components used in the construction of the cordless power tool such as a cordless impact tool are all heavy. This is undesirable to an operator who might have to support the weight of the tool for extended periods of time. Using this type of motor with its external rotor may reduce the overall weight and size of the cordless power tool. Accordingly, an embodiment of this disclosure includes a cordless impact tool that is more light and compact, than its comparable conventional impact tool counterpart.

In addition, the drive train of a cordless impact tool is made up of a series of components connected sequentially along an axis. This creates a form factor that may be too long to serve the need for access in some applications. Additionally, the outrunner motor architecture may achieve higher energy densities than the more common interior-rotor motors.

It will be appreciated by the skilled artisan upon reading this disclosure that the cordless impact tool may take advantage of the characteristics of the outrunner BLDC motor to achieve unexpected improvements in the power to weight ratio, and reduce overall length of the cordless impact wrench. Several additional characteristics of an outrunner BLDC motor that are beneficial to cordless power applications, as compared to conventional interior-rotor motors include, but are not limited to, high power density, high torque/low RPM, high rotor inertia, and reduced axial length.

With regard to high power density - permanent magnets in an electric motor create a magnetic field for the electromagnet to react against. Unlike the magnetic field strength of traditional windings which may be increased by supplying additional current, permanent magnets have a fixed magnetic strength. This creates a limiting factor. The outrunner BLDC design overcomes this limitation by increasing the relative space for the permanent magnets to reside. Here, the permanent magnets are situated outside of the stator diameter, rather than inside the stator diameter. The larger diameter has a longer circumference and therefore an increased volume of space that may be allocated to locate the magnets. The proportional increase in permanent magnets increases the overall magnetic field strength. Consequently, it is believed more power may be achieved in the same size motor package.

Regarding high torque/low RPM - the architecture of the outrunner BLDC motor has the magnetic interaction at the outside diameter of the stator rather than the inner diameter. It is generally believed that torque developed in a motor is proportional to the product of electromotive force occurring at the magnet/stator interface and the radius at which the force occurs. Since the magnet/stator interface is at a greater radius on outrunner BLDC motors when compared to interior rotor motors, the torque developed may be higher. This creates an unexpected benefit associated with the high torque/low speed characteristic of the outrunner BLDC motor. It requires less gear reduction in the drive train. And because reduction gears add cost and weight to the power tool, the higher torque/low speed of the outrunner BLDC motor is believed to result in a lighter weight power tool.

High inertia may also be a result of this new motor - tool configuration. With the permanent magnets located at a greater radius on the outrunner BLDC motor when compared to an interior rotor motor, it is believed the rotor inertia will be greater. This increased rotor inertia may produce an unexpected benefit of increased kinetic energy which may reduce motor speed ripple. Speed ripples occur when periodic externally applied loads force a periodic response from the motor. As the load increases, the speed decreases. Conversely, when the load decreases, the speed increases. When rotor inertia is higher, it will tend to be difficult to accelerate, meaning it takes longer to change its speed. If this time-dependent property is at a sufficient level, the frequency at which the load changes is too fast for the higher inertia rotor to respond so the rotor does not. It is believed the increased kinetic energy produced by the outrunner BLDC motor will increase the kinetic energy to reduce these ripples.

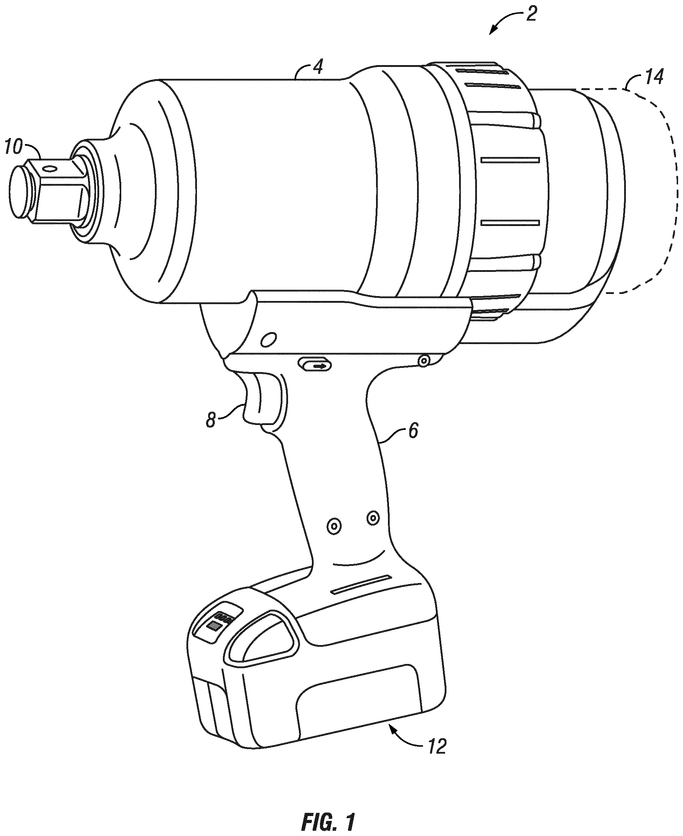

A perspective view of an illustrative embodiment of an impact tool 2 is shown in Fig. 1. As will be discussed further herein, other cordless power tools such as drills and sanders, for example, may also employ the outrunner BLDC motor. With regard to the illustrative cordless impact tool 2 depicted herein, it includes a housing 4 that is attached to, or formed integral with, handle grip 6. Depressing trigger 8 causes the motor inside housing 4 to rotate output drive 10. A battery or other like power source may be attached to base 12 of handle grip 6 to provide the means for powering the motor. Additionally, in this view, a ghost line portion 14 of housing 4 depicts an illustrative length of what a conventional housing would occupy if containing a conventional interior-rotor motor. A skilled artisan upon reading this disclosure will appreciate that when using an outrunner BLDC motor, less space is required to produce approximately the same amount of power. Accordingly, impact tool 2 does not need to have a housing 4 of the size that would include ghost line outline 14. This translates into a more powerful impact tool in a smaller package.

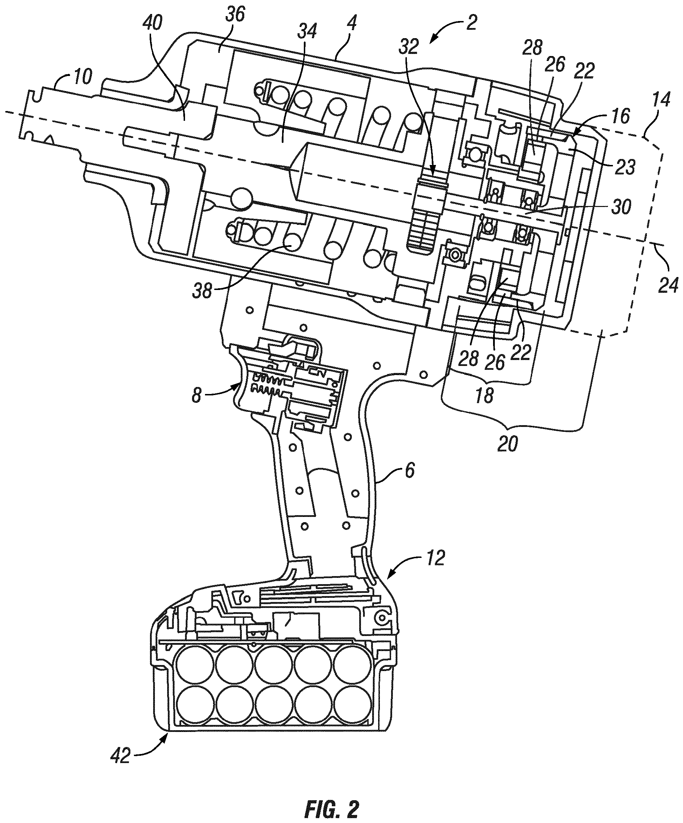

A cross-sectional elevational view of impact tool 2 is shown in Fig. 2. This view depicts how outrunner BLDC motor 16 is fitted in housing 4, and not needing the extra space represented by ghost line outline 14 required by a typical impact tool housing. Outrunner BLDC motor 16 occupies a length 18 that is smaller than what a comparable motor would occupy as represented by length 20. As shown in this illustrative embodiment, rotor 22 located at the outer periphery of outrunner BLDC motor 16 rotates about a central axis 24. Magnets 26 are attached (e.g., by an adhesive) to the inner periphery of rotor 22 and rotate about stator coil 28 located in the interior of outrunner BLDC motor 16. A central rotating pin 30 is located along the center of outrunner BLDC motor 16 and is tied to the exterior rotating rotor 22. Illustratively, central shaft 30 may be press-fit onto drive plate 23 which is press-fit onto rotor 22 (also known as a "back iron"). Accordingly, as outboard rotor 22 rotates, so too does central rotating pin 30.

Illustratively, central rotating pin 30 is then coupled to a gear or gear set, such as planetary gears 32 which will initiate operation of the impact tool 2. It will be appreciated by the skilled artisan upon reading the present disclosure that any variety of gears or other like structures to drive impact tool 2 or other power tool may be attached to central rotating pin 30. In the present illustrative impact tool, the structures for driving output drive 10 may be conventional or newly designed. The structures illustratively shown herein include pin 34 that rotates hammer 36 against the bias of spring 38 to create an impact by hammer 36 against anvil 40 causing same to rotate about central axis 24 to drive a fastener or other like structure. Such impact tools of this type include those disclosed in U.S. Patent No. 9,597,784, "Impact tools", issued March 21, 2017; U.S. Patent No. 9,592,600 "Angle impact tools", issued March 14, 2017; U.S. Patent No. 9,573,254, "Impact tools", February 21, 2017; U.S. Patent No. 9,555,532, "Rotary Impact Tool", issued January 31, 2017; U.S. Patent No. 9,550,284 "Angle Impact Tool", issued January 24, 2017; U.S. Patent No. 9,486,908, "Rotary Impact Tool", issued November 8, 2016; U.S. Patent No. 9,272,400, "Torque-limited Impact Tool", issued March 1, 2016; U.S. Patent No. 9,022,888, "Angle Impact Tool", issued May 5, 2015; U.S. Patent No. 8,925,646, "Right Angle Impact Tool" issued January 6, 2015; U.S. Patent No. 7,673,702, "Impact wrench", issued March 9, 2010; and U.S. Patent No. 7,562,720, "Electric motor impact tool", issued July 21, 2009. The disclosures of these patents are herein incorporated by reference.

Accordingly, employing this outboard rotor 22 of outrunner BLDC motor 16 creates the high-power density, high torque at low RPM, and high rotor inertia, to drive hammer 36 against the anvil 40. Also shown in this view is trigger 8 to operate impact tool 2. Battery pack 42 is attachable to base 12 of handle grip 6 to provide the power source for outrunner BLDC motor 16. It will be further appreciated by those skilled in the art upon reading this disclosure that such power source may be modified as needed to supply sufficient power to outrunner BLDC motor 16. Additionally, outrunner BLDC motor 16 may be sized as needed to provide the necessary torque for the designed utility of the impact tool, or other power tool utilizing the motor's features.

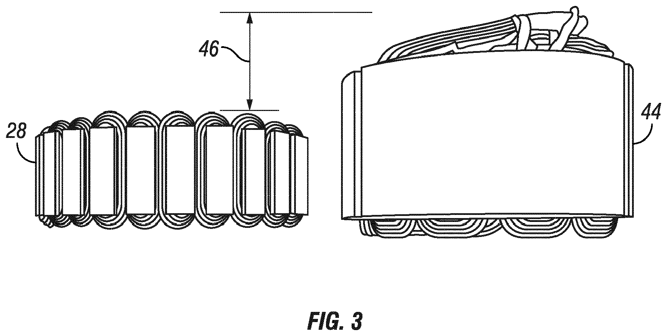

Comparative side elevation views of stator portion 28 of outrunner BLDC motor 16 as compared to stator portion 44 of a conventional interior-rotor motor are shown in Fig. 3. Despite outrunner BLDC motor 16 providing superior operating characteristics as described above, its stator 28 is shorter than a conventional motor stator 44 as represented by length 46. Again, this provides comparable as well as additional superior characteristics as discussed herein but in a smaller package.

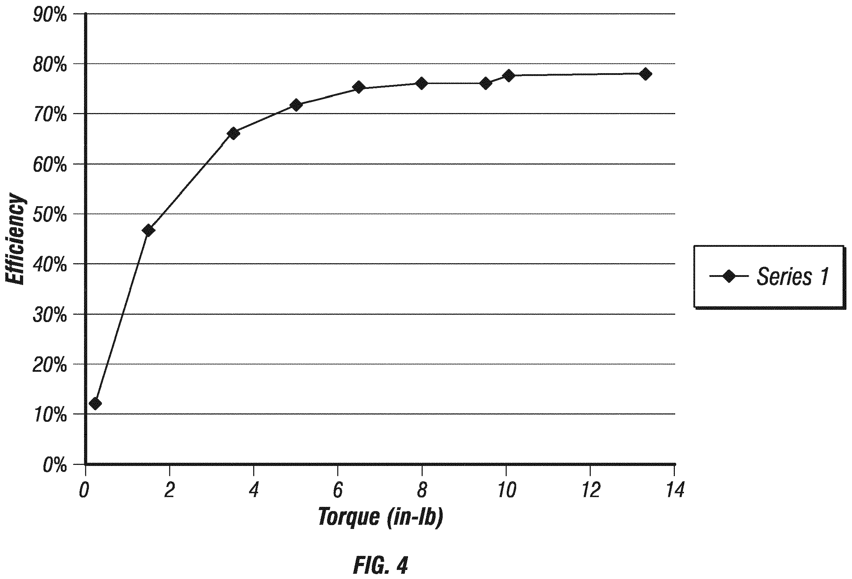

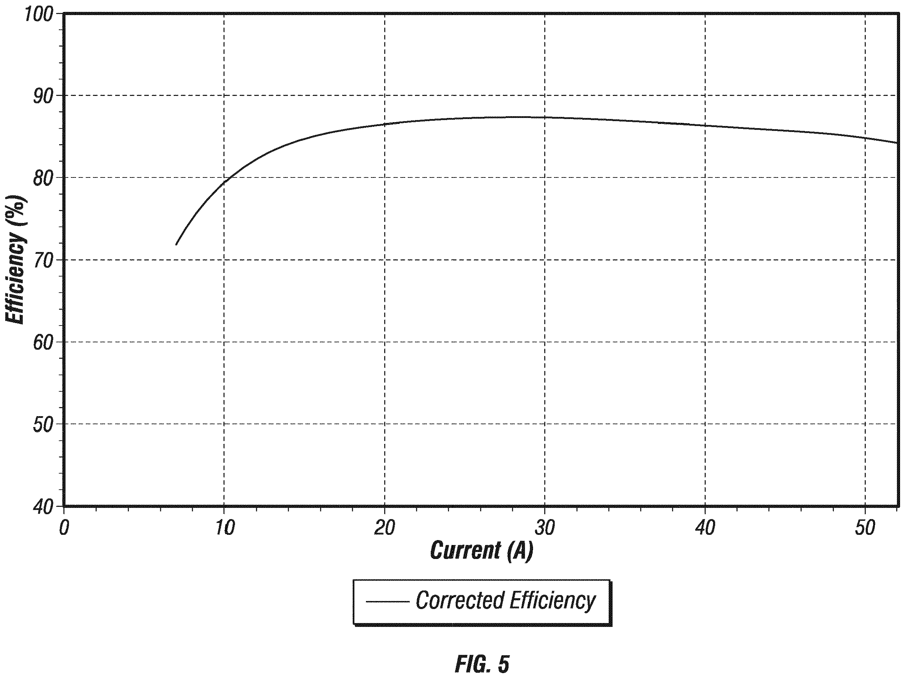

The charts in Figs. 4 and 5 illustratively depict the improved performance of an outrunner BLDC motor compared to a conventional interior-rotor motor. The charts in Figs. 4 and 5, were produced via dynamometer tests. For these tests a motor was coupled to a dyno brake through a torque transducer. A power supply provided ample power to the motor controller. The motor was operated while the brake attempted to slow the motor down. The transducer measured speed and torque as the brake slowed the motor down. As depicted in Fig. 4, the efficiency of an illustrative 40-volt BLDC interior-rotor motor such as that which uses stator 44 shown in Fig. 3, demonstrated about 77% efficiency. In contrast, however, and as shown in Fig. 5, a comparable outrunner BLDC motor provided about 87% efficiency. Efficiency was determined from the ratio of the shaft power delivered from the motor (Torque * Speed) and the power delivered to the motor (Voltage * Current). Because torque and current are linearly proportional to each other, it is believed either torque or current may be used for the X-axis of the charts in Figs. 4 and 5. The important aspect is the shape and peak of each curve. In addition, the outrunner BLDC motor produced about 43% less heat.

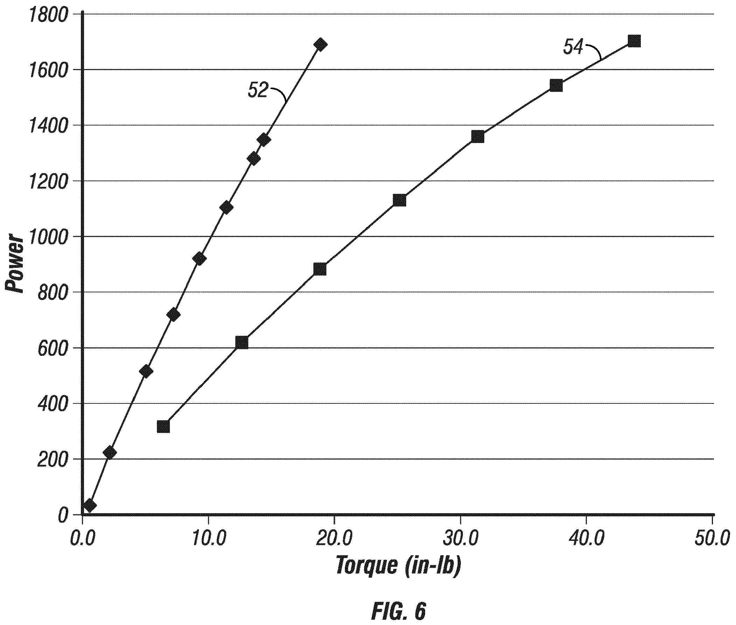

A side-by-side comparison depicting the power generated by both the interior-rotor motor represented by line 52 and an outrunner BLDC motor represented by line 54, is shown in Fig. 6. As is evident, both motors are operated at the same power. The outrunner BLDC motor represented by line 54, however, generates substantially more torque than its interior-rotor motor counterpart as represented by line 52. A comparison of the interior-rotor motor and the outrunner BLDC motor is shown below.

| Motor | Interior-Rotor | Outrunner BLDC Motor | Delta |
|---|---|---|---|
| Diameter (mm) | 78 | 88 | +10 |
| Stator Length (mm) | 50 | 30 | -20 |
| Volume (cm^3) | 239 | 182 | -57 |
| Volumetric Power Density (W/cm^3) | 7.12 | 9.32 | +31% |
| Implemented Volume (cm^3) | 287 | 207 | -80 |
| Implemented Volumetric Power Density (cm^3) | 5.93 | 8.22 | +39% |
| Motor weight (Kg) | 1.44 | 1.051 | -0.393 |
| Weight-Based Power Density (W/cm^3) | 1180 | 1617 | +37% |

This comparison demonstrates that with only a small increase in diameter, the outrunner BLDC motor has a shorter length, requires less volume and weight, and has increased volumetric and weight power density. Such volumetric power density is the ratio of power to volume that the motor occupies while the weight-based power density is the ratio of the power to weight of the motor. Also, because the outrunner requires a clearance around the rotating rotate that a conventional motor does not need, space was added and the ratios recalculated and added to the chart as Implemented Volumetric Power Density.

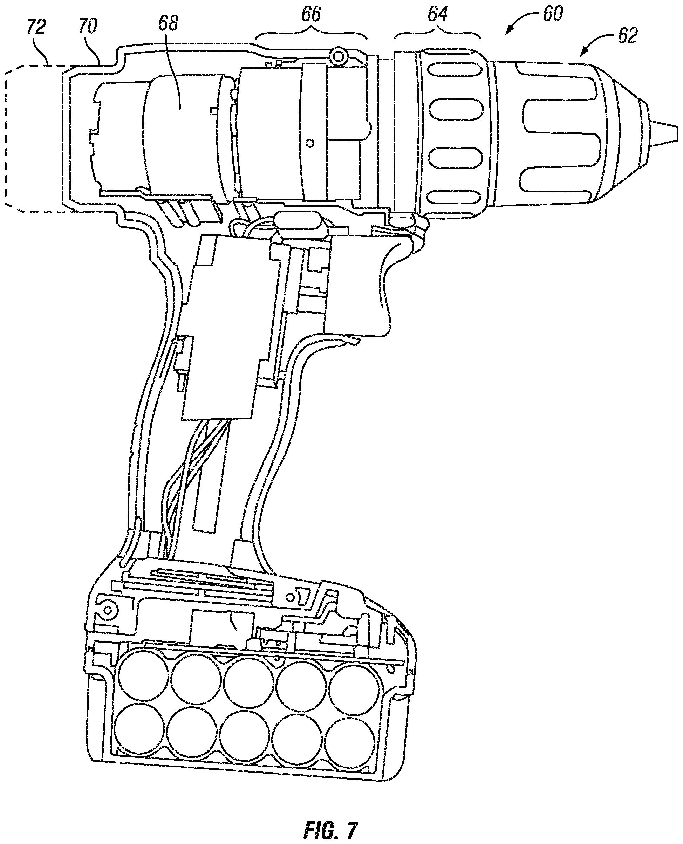

Another illustrative embodiment of the present disclosure includes a power drill such as power drill 60 that employs an outrunner BLDC motor rather than an interior-rotor motor. The cross-sectional view of power drill 60 shown in Fig. 7 includes a chuck section 62, clutch 64, gear box 66, and motor 68 located in housing 70. It is appreciated that motor 68 is an outrunner BLDC motor like motor 16 used in impact tool 2. Less space inside housing 70 is, thus, needed to house motor 68. Accordingly, also shown is ghost line outline 72 (similar to ghost line outline 14 of impact tool 2) that depicts the additional space needed to house a conventional interior-rotor motor. As shown, motor 68 does not take up nearly the space as a conventional interior motor would. This means the package size to operate the drill is less, thus requiring, a smaller housing. A slower motor with more torque will require less gearing, so the weight reduction of the drive train may be advantageous. Less heat translates into more efficiency, which may also result in a higher duty cycle. Both shorter motor and reduced gear reduction will shorten tool length. Such reduced tool length improves access, and would make it easy to fir the tool into confined spaces.

In further illustrative embodiments, other cordless tools may be made shorter by using the outrunner BLDC motor. In addition to impact tool and drills, oil-pulse drivers, angle impact drivers, steel rod cutters, metal shears, die grinders, plate joiners, multi tools, jig saws, and reciprocating saws, may have their conventional motors swapped-out and replaced with the outrunner BLDC motor. The disclosures related herein to impact tools and drills may be applied to these other cordless power tools as well.

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the present disclosure.

## Claims

1. Power tool comprising:
a housing that extends along a longitudinally extending axis;
an outrunner motor located within the housing;
wherein the outrunner motor includes an outboard rotating rotor that rotates around a stator portion of the outrunner motor; and
a rotating shaft is attached to the outboard rotating rotor and disposed through the stator portion;
wherein the rotating shaft attaches to rotating structures that rotate an output drive.

2. The power tool of Claim 1, further comprising at least one battery to power the outrunner motor.

3. The power tool of Claim 1 or 2, wherein the power tool is selected from the group consisting of an impact tool, drill, oil-pulse driver, angle impact driver, steel rod cutter, metal shear, die grinder, plate joiner, multi tool, jig saw, and reciprocating saw.

4. The power tool of any one of the preceding claims, wherein the outrunner motor is a brushless direct-current motor.

5. The power tool of any one of the preceding claims, wherein the rotating shaft rotated by the outboard rotating rotor extends to at least one gear.

6. The power tool of Claim 5, wherein the at least one gear is a plurality of gears.

7. The power tool of Claim 6, wherein the plurality of gears drive a hammer and anvil mechanism that is part of an impact tool, wherein the anvil drives the output drive.

8. The power tool of any one of the preceding claims, wherein the rotating shaft is attached to the outboard rotating rotor by a drive plate that secures to both the rotating shaft and the rotor.

9. The power tool of any one of the preceding claims, further comprising:
an impact tool mechanism that includes a hammer driven by a cam shaft rotated by at least one gear, such that the hammer is configured to impact an anvil that drives an output drive;
wherein the housing houses at least a portion of the impact tool mechanism;
wherein the rotating shaft is configured to rotate the at least one gear to cause the hammer to impact the anvil.

10. The power tool of any one of the preceding claims, wherein the outrunner motor includes a plurality of magnets attached to the outboard rotating rotor exterior of the diameter of the stator.

11. The power tool of Claim 10, wherein the outrunner motor includes a magnet stator interface that is exterior of the diameter of the stator.

12. The power tool of any one of the preceding claims, wherein the outrunner motor produces less heat than an interior-rotor motor.

13. The power tool of any one of the preceding claims, wherein the outrunner motor produces one or more characteristics selected from the group consisting of higher inertia, higher torque, lower revolutions per minute, and high power density as compared to an interior-rotor motor that has a longer axial length than the outboard rotating rotor of the outrunner motor.
